Europäisches Patentamt

European Patent Office

Office européen des brevets

(19)

(11) Numéro de publication : **0 281 447 B1**

(12) **FASCICULE DE BREVET EUROPEEN**

(45) Date de publication du fascicule du brevet :
31.07.91 Bulletin 91/31

(51) Int. Cl.⁵ : **B29C 67/14**

(21) Numéro de dépôt : **88400287.4**

(22) Date de dépôt : **08.02.88**

(54) **Procédé de fabrication de profilés de polymère thermoplastique par pultrusion - appareillage - produits obtenus.**

(30) Priorité : **18.02.87 FR 8702084**

(43) Date de publication de la demande :
**07.09.88 Bulletin 88/36**

(45) Mention de la délivrance du brevet :
**31.07.91 Bulletin 91/31**

(84) Etats contractants désignés :
**AT BE CH DE ES FR GB IT LI LU NL SE**

(56) Documents cités :
**EP-A- 0 056 689**
**EP-A- 0 125 472**
**FR-A- 2 031 719**
**FR-A- 2 184 997**
**FR-A- 2 271 912**
**GB-A- 866 310**

(73) Titulaire : **ATOCHEM**
**4 & 8, Cours Michelet La Défense 10**
**F-92800 Puteaux (FR)**

(72) Inventeur : **Glemet, Michel**
**Rue Max Carpentier**
**F-27470 Serquigny (FR)**
Inventeur : **Causier, Alain**
**Le Bois d'Alençon**
**F-27300 Bernay (FR)**
Inventeur : **Gourdon, Bernard**
**La Chaumine**
**F-27930 Dardez Evreux (FR)**

(74) Mandataire : **Foiret, Claude et al**
**ATOCHEM 4 & 8 Cours Michelet La Défense 10**
**F-92800 Puteaux (FR)**

## Description

La présente invention concerne un procédé de fabrication de profilés de polymère thermoplastique renforcés de fibres longues continues par pultrusion. Le procédé consiste, avant la conformation des rovings imprégnés de résine thermoplastique à écraser lesdits rovings de façon à former une nappe dont les fibres élémentaires des rovings sont imprégnés de résine thermoplastique à l'état fondu. La nappe est formée en faisant passer les rovings, après imprégnation de résine thermoplastique, dans une filière plate chauffée rectangulaire de façon à les écraser forçant ainsi la résine fondue à pénétrer entre les fibres. Le procédé s'applique aux polymères thermoplastiques en général, mais il permet également d'obtenir un profilé nouveau de polychlorure de vinyle renforcé de fibres longues continues.

De façon générale il est connu de fabriquer des profilés de résine thermoplastique par pultrusion. Le procédé habituel consiste à imprégner de résine des rovings puis à faire circuler l'ensemble en vrac dans un tunnel chauffé, par exemple à l'air chaud ou par infrarouge, à une température suffisante pour assurer la fusion du polymère. En sortie de tunnel les rovings enrobés de résine entrent dans un dispositif chauffé permettant de donner la forme finale du produit à réaliser qui est refroidi en sortie du dispositif (voir par exemple la demande de brevet EP 125472). Ce procédé présente un inconvénient sérieux : la difficulté de fondre et de répartir de façon homogène la résine thermoplastique au coeur des rovings.

Un roving est formé de la réunion de plusieurs fibres élémentaires continues. Dans le procédé de pultrusion, on imprègne plusieurs rovings qui, en passant dans le tunnel chauffé, vont en vrac s'unir les uns aux autres pour former des fuseaux de fibres groupés de fort volume. Le chauffage par rayonnement va difficilement permettre la fusion au coeur du fuseau de la résine thermoplastique et son imprégnation des fibres élémentaires. Ce manque d'homogénéité d'imprégnation et par voie de conséquence l'emprisonnement d'air entre les fibres non imprégnées vont être source de défauts dans les propriétés mécaniques du produit final. Ces phénomènes sont d'autant plus importants que le nombre de rovings est élevé et que le profilé final est conséquent.

En outre un tel procédé, compte tenu des propriétés du polychlorure de vinyle, ne permet pas de réaliser un profilé de polychlorure de vinyle rigide renforcé de fibres longues continues. Dans les conditions du procédé, la gélification du polychlorure de vinyle particulièrement dans le cas où il est exempt de plastifiant est impossible à obtenir par simple élévation de température sans risque de dégradation thermique. Elle est effectuée couramment dans des outils de malaxage qui créent un cisaillement de la matière indispensable à la gélification. Dans les conditions de ce procédé connu la gélification très incomplète de la matrice confère des défauts d'enrobage des fibres de renforcement conduisant à des profilés de qualité médiocre voire à des ruptures de fibres lors du tirage du profilé.

Le procédé selon l'invention permet dans la technique de pultrusion de conformer des rovings dont les fibres élémentaires sont pratiquement toutes imprégnées de résine thermoplastique après élimination maximum de l'air occlus entre les fibres. Le procédé consiste à imprégner des rovings, c'est-à-dire des mèches continues de fibres, de résine thermoplastique selon les techniques connues, à faire circuler l'ensemble dans un ensemble chauffé de façon à fondre la résine thermoplastique puis à conformer à chaud le profilé dans une filière appropriée pour donner au profilé sa forme sensiblement finale avant de le faire passer dans une seconde filière refroidie. La caractéristique du procédé est d'écraser les fuseaux de rovings, c'est-à-dire l'ensemble des mèches imprégnées de résine thermoplastique dans l'ensemble chauffé constitué d'une filière plate dont l'entrée évasée est suffisamment large pour laisser le passage au volume initial des fuseaux de rovings, l'entrefer d'épaisseur variable de la filière permettant d'amener en sortie l'ensemble imprégné sous forme de nappe d'épaisseur minimum avant conformation.

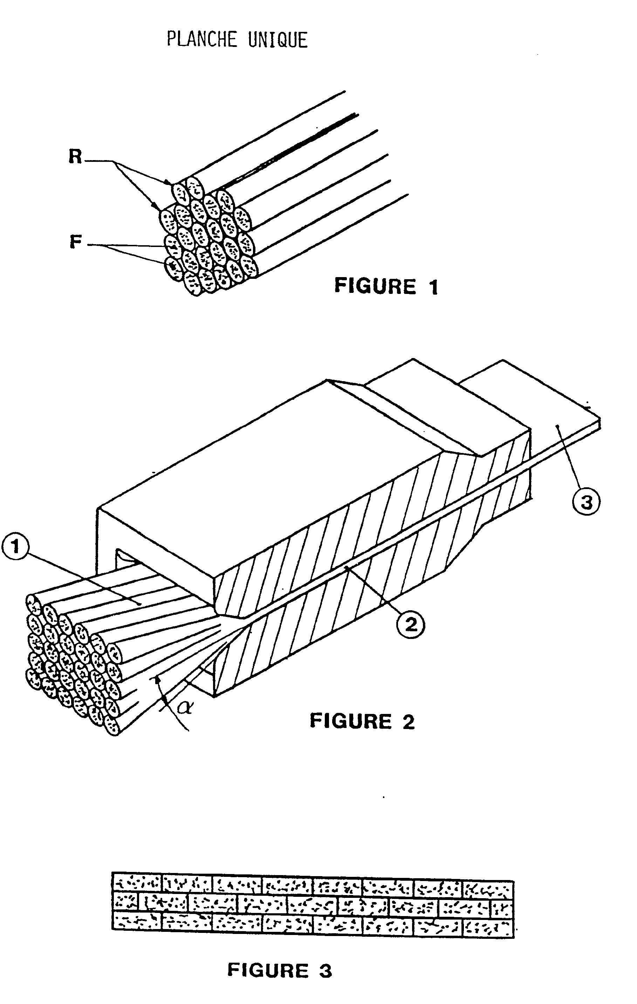

Les figures en annexe permettent de détailler la caractéristique du procédé. La Figure 1 illustre un fuseau de rovings R constitués eux-mêmes de l'union de plusieurs fibres F. Ces rovings selon l'invention sont avant leur réunion en fuseaux imprégnés de résine thermoplastique.

Les fuseaux sont introduits dans la filière de la Figure 2 par l'entrée évasée 1 et tirés et écrasés dans l'entrefer d'épaisseur variable 2. En sortie de la filière la nappe 3, constituée de fibres imprégnées de résine thermoplastique fondue, est dirigée vers le conformateur connu et déjà cité. Selon la Figure 3, la nappe sortant de la filière plate dont l'entrefer est de section sensiblement rectangulaire se présente sous forme de rovings écrasés étroitement liés les uns aux autres dont les fibres élémentaires sont imprégnées de résine thermoplastique. Cette imprégnation régulière est la conséquence de l'écrasement permettant d'une part d'augmenter la surface d'échange thermique et d'autre part d'éliminer au maximum l'air occlus à l'intérieur des rovings et à leur jonction. L'entrefer, de section sensiblement rectangulaire, est de géométrie sensiblement parallélépipédique rectangle sur la zone de sortie.

L'angle de raccordement alpha, montré en Figure 2, correspondant à la pente de la zone d'introduction entre l'extérieur et la partie horizontale de l'entrefer de la filière permet d'assurer une fusion progressive du polymère de surface qui joue alors le rôle de lubrifiant.

2

La longueur de la zone d'introduction et la valeur de l'angle de raccordement peuvent varier selon les polymères considérés et le volume de rovings préimprégnés à introduire. Une longueur comprise entre 35 et 50 mm. et un angle compris selon les cas entre 1 et 20° paraissent particulièrement bien adaptés.

La longueur de la filière doit être telle qu'en fonction de sa température, inférieure à la température de dégradation thermique du polymère thermoplastique, ce dernier au coeur de la nappe en sortie de ladite filière se trouve à l'état fondu.

L'épaisseur de l'entrefer de la filière est réglable de façon à pouvoir réaliser des nappes d'épaisseurs variées conduisant à des profilés de volume plus ou moins important. Ce réglage d'épaisseur peut se faire selon tout moyen permettant de jouer sur l'écartement de l'entrefer que ce soit par exemple par des systèmes de vis ou encore de ressorts permettant d'écarter ou de rapprocher les parois opposées de la filière.

Selon l'invention on imprégne des rovings selon les techniques connues, par exemple en déroulant les rovings dans un lit fluidisé de polymère thermoplastique sous forme de poudre fine ; on peut encore enrober les rovings en les extrudant au travers d'une filière en tête d'équerre permettant de les enduire d'une couche de polymère ; on peut aussi enrober les rovings de latex de polymère. Les rovings, comme déjà précisé, se présentent sous forme de mêches continues constituée de la réunion de plusieurs fibres élémentaires. Ces rovings peuvent être formés de fibres minérales ou organiques, les fibres de verre, de carbone et d'aramides étant les plus habituellement utilisées pour le renforcement des matières plastiques. Les rovings imprégnés, réunis en fuseaux, sont introduits dans la filière, précédemment décrite, chauffée de façon à fondre le polymère. La nappe sortant de la filière, maintenue à une température telle que le polymère reste à l'état fondu est convoyée vers la filière de conformation donnant à la nappe la forme du profilé final à réaliser.

Cette seconde filière se trouve bien entendu à une température suffisante pour maintenir le polymère suffisamment fluide pour être transformé. Il n'est pas exclu, surtout dans le cas de réalisation de profilés complexes ou volumineux de faire subir à la nappe une préconformation progressive avant la conformation finale. En sortie de filière de conformation le profilé traverse un conformateur refroidi dont la géométrie d'entrée est sensiblement identique à la géométrie de sortie de la filière de conformation. Le profilé est ensuite pris sur un banc de tirage où il est découpé aux dimensions voulues.

Le procédé selon l'invention est particulièrement adapté à la pultrusion de profilés pleins ou creux de formes variées à base de résines thermoplastiques renforcées de fibres longues continues. Les résines thermoplastiques particulièrement recommandées peuvent être choisies parmi les polyoléfines : polyéthylènes haute et basse densités, linéaires basse densité, ou polypropylène ; les copolymères éthylène-vinylacétate ; le polystyrène, les copolymères acrylonitrile butadiène styrène (ABS), le polychlorure de vinyle, les polyamides 6, 11, 12, 6-6, 6-10, les polyesters, le copolymère séquencé poly(éther-amide), les polymères fluorés, la polysulfone, la polyéthersulfone, le polycarbonate, les polymères thermoplastiques thermostables comme les polyétheréthercétone, polyphénylène sulfure, polyétherimide, polyphénylène oxyde, polyphénylène éther ou encore leurs mélanges, les oligomères thermoplastiques fonctionnels réactifs par polyaddition ou polycondensation avec éventuellement un coréactant.

Un autre intérêt du procédé est l'obtention d'un produit nouveau en l'espèce : un profilé de section conséquente de polychlorure de vinyle rigide renforcé de fibres longues continues et plus particulièrement de fibres longues de verre. Les profilés de polychlorure de vinyle de faible section renforcés de fibres longues sont connus, mais pour les raisons données précédemment dûes aux caractéristiques du polychlorure de vinyle, il n'a jamais été possible de réaliser des profilés de section conséquente dont la longueur des fibres de renforcement correspond de façon continue à la longueur du profilé.

Les profilés obtenus selon l'invention présentent la caractéristique de posséder une très grande rigidité. Par ailleurs à partir de tels profilés sous forme de joncs, rubans ou baguettes, il est possible de découper des éléments de longueurs variables dans lesquels la longueur des fibres de renforcement correspond à la longueur desdits éléments. Ces éléments découpés, une fois fondus sont transformés avantageusement par extrusion, injection-compression ou compression pour préserver la longueur finale des fibres. L'intérêt réside dans un accroissement substantiel des propriétés de rigidité, résistance à l'impact, stabilité dimensionnelle et rétention de ces propriétés aux températures élevées.

Les exemples suivants illustrent l'invention sans la limiter.

## EXEMPLE 1

Les rovings de fibres de verre sont dévidés par l'extérieur puis imprégnés de poudre de polyamide 6 (ORGASOL 1002 D) par passage dans un lit fluidisé.

La fusion du polymère est effectuée dans une filière plate, puis la conformation du profilé final 10 × 4 mm. s'effectue successivement dans une filière chaude de préconformation maintenue à la température de 280°C puis dans une filière de refroidissement maintenue à 22°C.

3

Pour cette réalisation la filière plate servant à la fusion possède la géométrie suivante :
- longueur : 300 mm.
- largeur : 100 mm.
- angle de raccordement : 15°
- longueur de la zone d'introduction : 35 mm.
- entrefer : 1 mm.
- épaisseur en sortie filière : 0,45 mm.

Les filières de préconformation et refroidissement ont un angle de raccordement de 20°C sur une longueur d'introduction de 5 mm.

Pour réaliser ce profilé 24 rovings 2400 tex de référence VETROTEX R 099 5122 X 1 sont utilisés. Le niveau d'imprégnation par poudre en lit fluidisé est maintenu constant à un niveau de 46% en volume.

Le volume d'un roving de fibres de verre avant imprégnation est de 0,45 × 4,5 mm. environ. Après imprégnation, le roving se présente sous forme de fuseau de diamètre 8 à 10 mm. environ. La vitesse de tirage en sortie est de 1 m/Min.

La rigidité des profilés ainsi fabriqués est mesurée par une méthode de flexion trois points selon la norme ASTM D 790. On mesure le module d'élasticité E et la contrainte-maximum $\sigma$.

A titre comparatif on prépare un profilé identique par conformation directe en faisant passer les fuseaux de rovings imprégnés de polyamide 6 dans un tunnel à air chaud de façon que la résine en sortie, se trouve à l'état fondu au coeur des fuseaux.

La masse de fibres enrobées de polyamide 6 fondu est introduite dans la filière de conformation maintenue à la température de 280°C.

En sortie le profilé est tiré dans la filière de refroidissement maintenue à 22°C.

Les résultants obtenus sont les suivants :

| | % de verre en en volume dans le profilé | Module de flexion E (GPa) | Contrainte maximum $\sigma$ (MPa) |
|---|---|---|---|
| Essai comparatif | 54 | 34 | 665 |
| Essai selon l'invention | 54 | 37 | 1007 |

EXEMPLE 2

Dans les conditions d'appareillage et de procédé de l'exemple 1 on fabrique un profilé de section 10 × 4 mm en polychlorure de vinyle renforcé de fibres longues continues de verre. Les conditions spécifiques à l'exemple sont :
- poudre de polychlorure de vinyle de diamètre moyen : 100 µm
- quantité de polychlorure de vinyle imprégné : 63,1% volume
- température de la filière plate : 200°C
- température de la filière de conformation : 190°C
- température de la filière de refroidissement : 15°C

La filière plate de fusion possède la géométrie suivante :
- longueur : 200 mm.
- largeur : 100 mm.
- angle de raccordement : 1°
- longueur de la zone d'introduction : 50 mm.
- entrefer : 1 mm.
- épaisseur sortie filière : 0,45 mm.

Dans les conditions d'appareillage de l'exemple 1 pour l'essai comparatif il n'a pas été possible de fabriquer de profilé à fibres longues correct. La gélification des fuseaux de rovings est insuffisante à coeur.

Une augmentation de la température du tunnel à air chaud provoque une dégradation thermique de la périphérie du fuseau de roving imprégné.

Dans ces conditions le taux de porosité du profilé final est trop élevé et les propriétés mécaniques sont médiocres et peu fiables.

Les résultats obtenus sur le profilé selon l'invention sont les suivants pour un pourcentage en volume de fibres de verre de 36,9 :

Module de flexion E (GPa) :  25,2
Contrainte maximum σ (MPa) :  476

## EXEMPLE 3

Dans les conditions d'appareillage et de procédé de l'exemple 1 on fabrique un profilé de section 10 × 4 mm à partir d'une poudre de prépolymère de polyamide 11 de masse molaire 4000.

La granulométrie de la poudre est comprise entre 80 et 200 μm. 18 rovings R 099 P 103 (VETROTEX) de 2400 Tex ont été utilisés.

La vitesse de tirage est de 0,5 m/min.

La remontée en viscosité du prépolymère s'effectue in situ par chauffage dans la filière plate avec élimination d'eau avant la filière de conformation.

Les conditions spécifiques de l'exemple sont :
- quantité de polyamide 11 imprégné : 57,4% en volume
- température de la filière plate : 270°C
- température de la filière de conformation : 240°C
- température de la filière de refroidissement : 22°C

La géométrie de la filière plate est la suivante :
- longueur : 300 mm.
- largeur : 100 mm.
- angle de raccordement : 15°
- longueur de la zone d'introduction : 35 mm.
- entrefer : 1 mm.
- épaisseur sortie filière : 0,45 mm.

Les résultats obtenus sur le profilé sont les suivants pour un pourcentage en volume de fibres de verre de 42,6 :

Module de flexion E (GPa) :  26,0
Contrainte maximum σ (MPa) :  450

## Revendications

1. Procédé de fabrication de profilés de polymère thermoplastique renforcé de fibres longues continues consistant selon la technique de pultrusion à imprégner de résine thermoplastique des mèches de fibres, à faire circuler ces mèches imprégnées dans un ensemble chauffé de façon à fondre la résine puis à conformer à chaud le profilé dans une première filière appropriée pour lui donner sa forme sensiblement finale avant de le faire passer dans une seconde filière pour le refroidissement, caractérisé en ce que l'on écrase l'ensemble des mèches imprégnées dans l'ensemble chauffé constitué d'une filière plate dont l'entrée est suffisamment large pour laisser le passage au volume initial des mèches imprégnées, l'entrefer de ladite filière plate d'épaisseur variable, permettant d'amener en sortie l'ensemble des mèches imprégnées sous forme de nappe d'épaisseur minimum avant conformation.

2. Procédé selon la revendication 1 caractérisé en ce que l'entrefer de la filière plate de section sensiblement rectangulaire, possède une géométrie sensiblement parallélépipédique rectangle sur la zone de sortie.

3. Procédé selon l'une des revendications 1 ou 2 caractérisé en ce que l'angle de raccordement correspondant à la pente de la zone d'introduction entre l'extérieur et la partie horizontale de l'entrefer de la filière plate est compris entre 1 et 20°.

4. Procédé selon l'une des revendications 1 à 3 caractérisé en ce que les fibres des mèches minérales ou organiques sont de préférence choisies parmi les fibres de verre, de carbone ou d'aramides.

5. Filière plate utilisée en pultrusion pour fondre la résine thermoplastique imprégnée sur des mèches de

fibres longues continues avant la conformation de l'ensemble caractérisé en ce qu'elle possède un entrefer d'épaisseur variable de section sensiblement rectangulaire et de géométrie sensiblement parallélépipédique rectangle sur la zone de sortie, l'angle de raccordement, correspondant à la pente de la zone d'introduction entre l'extérieur et la partie horizontale de l'entrefer étant compris entre 1 et 20°.

## Patentansprüche

1. Verfahren zum Herstellen von Profilteilen aus einem durch lange Endlosfasern verstärkten thermoplastischen Polymeren, das nach der Zieh-Strangpreßtechnik darin besteht, mit thermoplastischem Harz Faserlunten zu tränken, diese getränkten Lunten zum Schmelzen des Harzes in einer beheizten Vorrichtung umlaufen zu lassen, sodann in einem zweckdienlichen ersten Strangpreßwerkzeug das Profilteil so warmzuformen, daß es seine ungefähre Endgestalt erhält, bevor es zum Abkülen in ein zweites Strangpreßwerkzeug geleitet wird, dadurch gekennzeichnet, daß die Gesamtheit der getränkten Lunten in einer beheizten Vorrichtung zusammengepreßt werden, die von einem flachen Strangpreßwerkzeug gebildet ist, dessen Eintrittsöffnung ausreichend groß ist, um die getränkten Lunten in ihrem Anfangsvolumen durchzulassen, wobei der Spalt des flachen Strangpreßwerkzeugs von veränderlicher Dicke ist, derart, daß die Gesamtheit der getränkten Lunten in der Form eines Vlieses von kleinstmöglicher Dicke vor der Formgebung zum Auslaß hinleitbar sind.

2. Verfahren nach Anspruch 1, dadurch gekennzeichnet, daß der Spalt des flachen Strangpreßwerkzeuges von zumindest annähernd rechteckiger Querschnittsgestalt im Auslaßbereich die ungefähre Geometrie eines rechtwinkligen Parallelepipeds hat.

3. Verfahren nach einem der Ansprüche 1 oder 2, dadurch gekennzeichnet, daß der der Neigung des Zuführbereiches zwischen der Außenseite und dem waagerechten Abschnitt des Spaltes des flachen Strangpreßwerkzeugs entsprechende Übergangswinkel zwischen 1 und 20° beträgt.

4. Verfahren nach einem der Ansprüche 1 bis 3, dadurch gekennzeichnet, daß die Fasern der mineralischen oder organischen Lunten vorzugsweise aus der Gruppe mit Glas-, Kohlenstoff- oder Arylamid-Fasern gewählt sind.

5. Flaches Strangpreßwerkzeug, das beim Zieh-Strangpressen zum Schmelzen des thermoplastischen Harzes, mit dem die Lunten langer Endlosfasern getränkt sind, vor der Gesamtformgebung der Lunten benutzbar ist, dadurch gekennzeichnet, daß es einen Spalt von veränderlicher Dicke aufweist, der von zumindest annähernd rechtwinkliger Querschnittsgestalt ist und im Auslaßbereich die ungefähre Geometrie eines rechtwinkligen Parallelepipeds hat, wobei der der Neigung des Zuführbereichs zwischen der Außenseite und dem waagerechten Abschnitt des Spaltes entsprechende Übergangswinkel zwischen 1 und 20° beträgt.

## Claims

1. Process for the manufacture of sections of thermoplastic polymer reinforced with continuous long fibres consisting, according to the pultrusion technique, in impregnating a fibre rovings with thermoplastic resin, in passing this impregnated rovings through a heated assembly so as to melt the resin and then in hot-forming the section in an appropriate first die to give it its substantially final form before passing it through a second die for cooling, characterised in that the assembly of the impregnated rovings is crushed in the heated assembly consisting of a flat die whose entry is sufficiently wide to permit the passage of the initial volume of the impregnated rovings, the variable-thickness gap of the said flat die permitting the assembly of the empregnated rovings to be brought at the exit into the form of a sheet of minimum thickness before forming.

2. Process according to Claim 1, characterised in that the gap of the flat die of substantially rectangular section has a substantially parallelepipedal rectangle geometry in the exit region.

3. Process according to either of Claims 1 and 2, characterised in that the transmition angle corresponding to the slope of the entry region between the outside and the horizontal part of the gap of the flat die is between 1 and 20°.

4. Process according to one of Claims 1 to 3, characterised in that the fibres of the inorganic or organic rovings are preferably chosen from glass, carbon or aramid fibres.

5. Flat die employed in pultrusion for melting the thermoplastic resin impregnated onto continuous long fibre rovings before the forming of the assembly, characterised in that it has a variable-thickness gap of substantially rectangular section and of substantially parallelepipedal rectangle geometry in the exit region, the transition angle corresponding to the slope of the entry region between the outside and the horizontal part of the gap being between 1 and 20°.

PLANCHE UNIQUE

**FIGURE 1**

**FIGURE 2**

**FIGURE 3**